# EUROPEAN PATENT SPECIFICATION

(11) **EP 1 474 904 B1**
(45) Date of publication and mention of the grant of the patent: **13.09.2006**
(21) Application number: 03704772.7
(22) Date of filing: 07.02.2003
(51) Int. Cl.: H04L 29/06, H04L 12/56

(54) **INFORMATION ROUTING**
INFORMATIONSWEGELEITUNG
ACHEMINEMENT D'INFORMATION

(30) Priority: 08.02.2002 GB 0203057
(43) Date of publication of application: 10.11.2004
(73) Proprietor: Abgenial Systems, Inc., Mountain View, CA 94040 (US)
(72) Inventor: THWAITES, Jacoby, M., Michaelhouse Management Ltd., London EC2A 2BH (GB); PATEL, Bimal, Michaelhouse Management Limited, London EC2A 2BH (GB)
(74) Representative: Gymer, Keith Francis
(86) International application number: PCT/GB2003/000568
(87) International publication number: WO 2003/067846

(56) References cited:
- EP-A- 1 179 928
- US-B1- 6 216 173

## Description

The present invention relates to processes and means by which multiple computers in networked systems are enabled to make available and/or exchange information. The invention is particularly directed at improved provision of an integrated system for access to and use of information by any one or more of multiple computer systems without requiring specifically programmed responses or requests in or from the distinct systems.

Document US6216173 discloses a routing system aware of the content and the requirements of data and service requests, and the capabilities of services accessible via the system. A service request is routed to the most suitable service or combination of services to fulfill the request. The routing decisions are based on the content and properties of the information.

An information routing method and the physical implementation of an information router with such properties is described in European Patent Application EP01306806.9 (published as EP1179928 on February 13, 2002) in the name of the present applicant.

Application EP01306806.9 describes a method of facilitating the exchange and processing of information in and between a plurality of Blocks (a Block being defined as an information-providing or information-processing element - i.e. an information user or information source or both, in an integrated data network), in which at least one Block has a requirement to receive information from one or more other Blocks in the network. The method utilises an Information Routing Layer to manage the exchange of information between Blocks and the fulfilment of a specific Information Request from the Block which has a requirement to receive information; individual Blocks which can provide or process information on the network are registered at the Information Routing Layer; each unit of information is handled in the Information Routing Layer as a Field within a Dataset uniquely identified and associated with the Block first responsible for providing information in such a Dataset; and on receipt of an Information Request specifying at least one Field, the information Routing Layer operates to match the or each requested Field with a proper Set comprising a corresponding Field (or Fields) selected from an available Dataset or Datasets.

In embodiments described in Application EP01306806.9, one or more Blocks may also have an information processing capability to produce one or more specified output Fields when provided with one or more specified input Fields. This is recorded in the Information Routing Layer as an Exchange Set for each Block with such a capability. The input and the output Field(s) are specified for each such Block, and the Information Routing Layer is enabled to form an Aggregate Set of one or more Fields from an available Dataset or Datasets with one or more of such Exchange Sets so as to enable the fulfilment of a specific Information Request.

The Information Routing Layer provides the facility for a Block to offer or convey information onto the network, to make requests for information, and to exchange new information in return for existing information. Information stored in the form of Datasets (combinations of Field names, types, values and other components) is conveyed from one Block to another by the process of "Information Routing", such that an existing Dataset can be provided or an Aggregate Set can be constructed using available Exchange Sets where appropriate to meet an Information Request from a Block in the integrated data network without programmatic or specified workflow reference to other Blocks. This feature provides advantages in terms of convenient scalability, resilience and generic applicability.

The inventors have found that the basic information routing methods and apparatus described in Application EP01306806.9 had a number of shortcomings and potential limitations.

The present invention provides improvements to, and developments of, the information routing methods and apparatus described in Application EP01306806.9, offering the benefits of enhanced performance and additional functionality.

In the basic system, when a Block supplied a new Field 'a' to the Information Routing Layer, the Information Routing Layer had no means of knowing whether the Block might also be intending to provide any further Field(s). The Information Routing Layer consequently recalculated possible aggregation of available Datasets and Exchange Sets every time a new Field was provided by a Block. A Field 'a' provided by a Block might then be placed alone in a Dataset which could immediately be aggregated with a first Exchange Set requiring the Field 'a' and providing output Fields 'b' and 'c' (say), which would be added to that Dataset. If the originating Block was in fact planning to deliver Fields 'a' *and* 'b' to the Information Routing Layer itself to enable a new Dataset to be created with Fields 'a' *and* 'b' for aggregation with a second Exchange Set to obtain another output Field 'd' (say), this intent would inevitably be frustrated. (The initial Dataset with just 'a' would have been aggregated to hold Fields ('a,b,c') and the second Field 'b' provided by the originating Block would have to be placed alone on a new Dataset, which would then not have both the Fields required for aggregation with the second Exchange Set.) The present invention resolves this problem by allowing a Block to declare that it is intending to provide the Information Routing Layer with a set of Fields and the Information Routing Layer is to place the complete set together onto a new Dataset. This may be achieved by means of a Provider Function as further described below. This brings a major performance advantage to the Information Routing Layer, in that it does not need to calculate routes to aggregate sets each time a Field is received. Instead, route calculation need only happen after receipt of a complete set of Fields. In the case where a Block is intending to provide hundreds of fields, this is very important. The original system did not allow for an integrated, fail-safe means for creation of a new Dataset at the Information Routing Layer as a result of information being received by a Block. Two separate operations were required: firstly, an Information Request by a Block and then the delivery to the Information Routing Layer of the new Fields raised by the Block after fulfilment of the Information Request. However, this delivery would be under control of the Block and would always appear unsolicited (and unrelated to the Information Request) to the Information Routing Layer. If the Block failed internally, such that the intended new Fields were never delivered to the Information Routing Layer, the failure would be unknown to the Information Routing Layer and any process involving these Fields would be unrecoverable.

The present invention allows the operations of Field receipt, processing and delivery by a Block to be treated as integrated by the Information Routing Layer i.e. the either all the operations succeed or all are considered to have failed. The Information Routing Layer can then recover a process if a Block fails. A Dataset supplying Fields to a Block which is then expecting to output Fields will not be marked by the Information Routing Layer as having supplied the Fields requested by a Block until after the Block has delivered the promised output Fields back to the Information Routing Layer. The Information Routing Layer can thus retry the process or use alternate means if the Block fails to deliver. This integration is achieved by means of a Consumer Function as described in further detail below. The Information Routing Layer is provided with the facility to "time-out" a Function if the relevant Block should fail to provide the intended Output Fields for placing on a new Dataset within a set time.

The present invention further provides for Attributes to be associated not just with Datasets, as in the original system, but with Exchange Sets (or Exchange Functions as herein defined) and Consumer Functions. The nature of a Function (e.g. whether it is to be treated as an Exchange Function whose Output Fields must be placed on the same Dataset as provides its Input Fields, or as a Consumer Function whose output Fields are to be placed on a New Dataset, may be determined by an Attribute associated with the Function.

In the original system, there was no way for a run-time condition to cause different routes (or Aggregate Sets) to be selected. The present invention provides the facility for an Exchange Set (or Function) or a Consumer Function to specify a Partial Output. This is where the set of identified Output Fields is indeed provided by a Function, but one or more such Output Fields are marked by the Block for discarding upon receipt by the Information Routing Layer. The discarding may be determined by the Block resetting the Field type or an Attribute associated with a Field to act as a discard flag for the Information Routing Layer. This forces the Information Routing Layer to recalculate any Aggregate Route of which the Function providing Partial Output is part, with the effect of enabling conditional routing or branching.

The original system required a Field to exist for a Dataset to be created and a Field to be specified as input or output of an Exchange Set (or Function). The present invention provides the facility for the null set of Fields and for an empty set of Fields to be provided as input to and/or output from a Function. This facility enables a number of additional operations to take place providing increased flexibility for the Information Routing Layer and Blocks. An Exchange Function with an empty Input may be prompted into delivery of Outputs only when the Information Routing Layer provides an empty Field set - this may be useful for date or time-stamping Datasets, for example.

In the original system, no facility existed whereby a Function (e.g. an Exchange Set or even an Information Request itself) could act as a 'Terminator' causing the removal of a Dataset that provided the specified input fields. The 'expiry' facility (whereby a Dataset was removed once *all* possible combinations of proper Sets of Fields had been provided) rapidly becomes more unlikely to be applied as the number of Fields on the Dataset increases.

The present invention allows a Function to have Attributes, including a Terminator' Attribute, whereby a Dataset that supplies a Function which has that Attribute will be removed upon completion of that Function. This provides an important practical housekeeping facility, ensuring that the Information Routing Layer and its applications can operate more effectively without the system becoming clogged by ever-increasing numbers of practically redundant Datasets. A Dataset may also have a self-destruct (or 'use-by') Attribute to provide for its own elimination.

The improvements offered by the present invention in its various aspects consequently include, for example:
- Automatic fail-safe processing, because any Function failure results in the Information Routing Layer being able to retry using a separate, identical Function, or a recalculated equivalent Aggregate Route;
- Automatic load balancing, because any Block can provide Function(s) identical to those already provided by another Block. If those of one Block are busy at the time the Information Routing Layer tries to invoke them, then those of another Block can be invoked instead; Automatic parallel processing, because no Function depends for its operation on any other Function. The Information Routing Layer can use any Function which is part of an Aggregate Route as soon as all the input fields for that Function are present on a Dataset;
- Automatic scaling, because any and all identical Functions can be executed in parallel in the context of separate Aggregate Routes;
- Upgrading without downtime, because new implementations of individual Functions can be introduced without switching off the old implementations first. Additionally, new Functions to take the place of more than one existing Function can be introduced without switching off the old Functions first - prioritisation or alternation of Functions may be determined by setting relevant Function attributes accordingly.

In one aspect, the invention provides a method of facilitating the exchange and processing of information in and between a plurality of Blocks, each Block comprising one or more information-providing, information-processing or information-consuming elements in an integrated data network, the method comprising
- providing an Information Routing Layer to manage the exchange of information between Blocks and the fulfilment of at least one Consumer Function from a Block having a requirement to receive information and a capacity to provide an output in response to the receipt of that information; wherein
- each Block which can provide, process or consume information on the network is registered at the Information Routing Layer;
- one or more Blocks has an information processing capability to produce an Output Field set when provided with a specified Input Field set, this capability is recorded in the Information Routing Layer in the form of an Exchange Function for each Block with said capability specifying the Input Field set and the Output Field set for each such Block;
- a unit of information is handled in the Information Routing Layer as a Field within a Dataset uniquely identified and associated with the Block first responsible for providing information in such Dataset and information is input to and output from a Block in a Field set;
- on receipt of a Consumer Function specifying an Input Field set and an output Field set, the Information Routing Layer operates to match the Consumer Function with a Proper Set (which may be the empty or null Set) comprising a corresponding Field set selected from an available Dataset or Datasets or to form an Aggregate Route using one or more Fields from an available Dataset or Datasets with one or more Exchange Function(s) so as to enable fulfilment of the Consumer Function Input Field set; and
- following supply of the Input Field set to the Consumer Function the Information Routing Layer places the Output Field set delivered by the Consumer Function onto a new Dataset.

A Function may have one or more associated Attributes, which are recognised and used by the Information Routing Layer to determine how to provide or process Input or Output Field sets to or from such a Function.

Attributes may include a "Value" associated with fulfilment of a Function (e.g. delivery of a requested Input Field set) and a "Cost associated with the delivery of a specified Output Field set. The Information Routing Layer may use such Attributes for prioritising and managing its operation consistent with applicable resource constraints.

An Attribute may be used to determine whether a Function is to be treated as a Consumer Function (having its Output Field set placed onto a New Dataset) or as an Exchange Function (having its Output Field set placed onto the same Dataset as provide the relevant Input Field set).

A Function may enable the facility for conditional routing by the Information Routing Layer at runtime by providing only a Partial Output Field set. In this case, one or more Fields in the Output Field set from such a Function will be marked to be discarded by the Information Routing Layer.

An Input or Output Field set may be an empty set or a null set. Use of such sets provides additional flexibility and functionality as explained in more detail in the specific description below.

A Block intending to provide to the Information Routing Layer, unsolicited, a Field set, all the Fields of which are intended to be made available together on a new Dataset, may indicate this intention to the Information Routing Layer by raising a Provider Function having the intended Fields specified in the Provider Function Output Field set and a null Input Field set.

The Information Routing Layer may be instantiated on request.

In a corresponding operational embodiment, the invention provides an Information Router for facilitating the exchange and processing of information in and between a plurality of Blocks, each Block comprising an information-providing, information-processing or information-consuming element in an integrated data network, at least one Block having a requirement to receive information from one or more other Blocks, the Information Router utilising one or more computer processor(s) programmed to manage the exchange of information between Blocks and the fulfilment of a specific Consumer Function from a Block having a requirement to receive information and a capacity to provide an output in response to the receipt of that information; whereby each Block which can provide or process information on the network is registered by the Information Router; a unit of information is processed by the Information Router as a Field within a Dataset uniquely identified and associated with the Block first responsible for providing information in such Dataset and information is input to and output from a Block in a Field set; and whereby on recognition of a Consumer Function specifying an Input Field set and an Output Field set, the Information Router will operate to match the Input Field set with a Proper Set (or empty or null Set) comprising a corresponding Field set selected from an available Dataset or Datasets and, following supply of the Input Field set to the Consumer Function, to place the Output Field set delivered by the Consumer Function onto a new Dataset.

Additional features described above in relation to the method may be implemented correspondingly in operational embodiments according to the invention.

Aspects of the invention will now be described in detail and by way of example with reference to the accompanying drawings, in which:
Fig. 1 is a block diagram (taken from EP Application 01306806.9) illustrating the relative hierarchy of Data Routing level, Information Routing Level, Districts and Blocks in an integrated data network adapted to exploit the invention;
Fig. 2 is a block diagram showing elements included in an example Function;
Fig. 3 is a flow chart showing the basic processes involved in Information Routing according to the invention;
Fig. 4 is a flow chart showing the processes involved in the formation of an Aggregate Route; and
Figs. 5 to 13 illustrate the principal stages in application of the present invention to a prime number calculation process.
Fig. 14 illustrates a web-based implementation with reference to the process of Figs. 5 to 13.

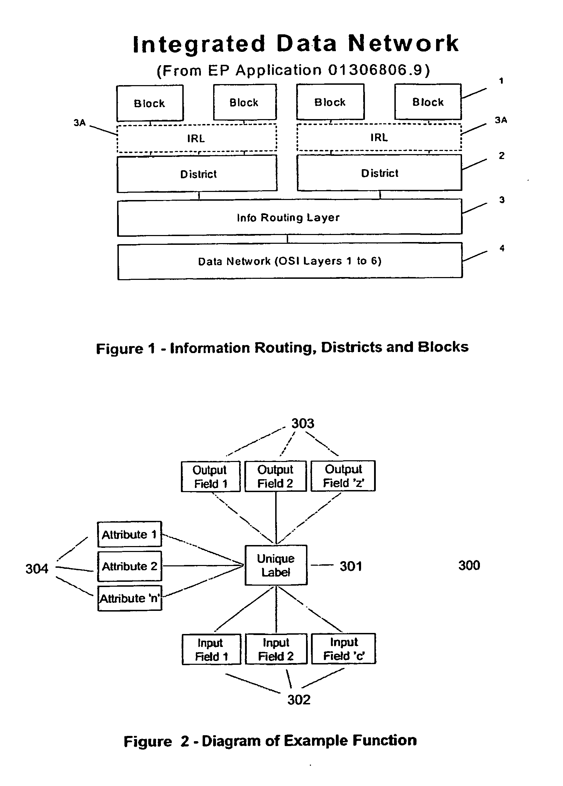

Figure 1 illustrates key elements of an integrated data network embodying basic features appropriate to the present invention in the form of the structure originally described in EP Application 01306806.9. As described in that application, the integrated network is divided into Blocks 1, which represent individual information-processing, information-providing or information-consuming elements (sources, processors and/or users of information), in the network. As such, each Block represents an individual computer, a local network, a transducer or a combination of such entities which can act or be treated as a unitary "Block" within the integrated data network. In Figure 1, two Blocks in each case form a local District 2 and information is routed between Districts via the Information Routing Layer 3, which connects them for that purpose. Data connections between the Blocks 1, Districts 2 and Information Routing Layer 3 are provided by conventional wired or wireless connections. Additional Information Routing Layers (IRL) 3A (shown in dashed lines) may also optionally be provided at each District level to route information directly between Blocks in the same District. The Information Routing Layer 3 is implemented at in the application layer above the basic underlying data network layers 4 (in accord with the well-known OSI 7-layer model), where data is transferred using the conventional network protocols such as TCP-IP.

The basic Information Routing Layer, as described in EP 01306806.9, allows collections ("Datasets") of units of information ("Fields") contributed by one or more applications, data users or sources ("Blocks"), to be formed in order to satisfy the requirements for inter-Block information sharing or exchange in response to an "Information Request" from a Block. An "Information Request" may be fulfilled directly from an existing Dataset, if the requested Field(s) are available, or by utilising one or more "Exchange Sets" (which provide one or more additional output Field when supplied with one or more different input Field) in a process of aggregation, the Information Router effectively forming an "Aggregate Set" of existing Datasets and Exchange Sets to obtain the requested Field(s). A Dataset may have one or more specified "Attributes" which can be used by the Information Routing Layer for process management purposes and a Dataset will also normally carry details of the Field(s) supplied from the Dataset in response to any Information Request.

The inventors have recognised that, as originally defined, the basic Information Request and Exchange Set configurations offer restricted functionality, and it is possible to achieve additional flexibility by introducing alternative configurations (i.e. different types of "Set"). As these "Sets" can serve a variety of informational and operational or administrative purposes in the Information Routing Layer, it is also appropriate to adapt the terminology. The various configurations are therefore herein referred to as "Functions" in general rather than "Sets".

Figure 2 illustrates diagrammatically the typical elements which can be included within an example Function 300. A Function always has a unique label 301 identifying the Function (and the Block responsible for the Function). Input Fields 302 (1) to (c) can contain input data, which may be provided or processed by a Block. A Field is made up of at least an identifier ("Field Identifier"), and a value ("Field Value"). The Field Value may be a traditional programmatic Field data type such as integer, float or string. It may also be a data type such as uniform resource locator, or a proprietary file format such as that for a commercial spreadsheet. A Field is always contained in a Function or Dataset. When provided with the specified Input Fields 302, the Block responsible for the Function 300 may provide an Output Field set comprising Fields 303 (1) to (z). An Output Field may have the same Identifier as an Input Field (although it may have a different Field Value). This is fundamentally different from the basic Exchange Set described in EP-01306806.9, where such an identity of Fields was not permitted. The consequence is that, in such cases, the Function cannot add its Output Field set to the Dataset which provided the identical Input Field(s) but must place the Output Field set in a New Dataset. Additionally, the option is available for a Function to provide only a partial output. This option is useful to effect conditional branching in the information routing at runtime depending upon the respective Fields supplied to or provided by a given Function.

A Function 300 will normally have one or more Attributes 304, which can be used by the Information Routing Layer for process management. Typically, Attributes 304 may include parameters corresponding to the time of creation of a Function, an identifier of the Block responsible for the Function, operational "Cost" or 'Value", "Expiry Date", for example, which can be used by the Information Routing Layer for administrative purposes induding prioritisation of resources and accounting. An Attribute may indicate a special action associated with some aspect of the Function (for example, a Consumer Function may have a "Deletion Attribute" which specifies that the Dataset providing the Input Fields for that Function should then be deleted from the Information Router). The selection of a partial output (i.e. discarding of certain Output Fields) may be determined according to an Attribute 304 of the relevant Function. Another Attribute may act as a usage counter - for example, a Function may have an Attribute limiting the number of times it may be invoked to, say, 10 times, or providing for time-out if an operation is not completed within a specified period.

The set of Input Fields 302 and/or the set of Output Fields 303 may each be empty or Null. The various different types of Function, depending on the nature of the Input and Output Fields are listed in Table 1.

The Exchange Function i) corresponding to the basic Exchange Set; the operation of creating a new Dataset on receipt of unsolicited Fields from a Block; and the (Transient) Information Request v) corresponding to the basic Information Request are all essentially as described in EP 01306806.9. The additional Function configurations are features of the present invention.

The Consumer Function ii) is a special Function which will force the Information Routing Layer to generate a New Dataset for any Output Fields provided by the Consumer Function. A Consumer Function will force this generation automatically whenever a common Field is specified in its Input and its Output Field sets. It is so-called because it consumes a set of Input Fields from one Dataset and must have its Output Field set placed on a new Dataset in the Information Routing Layer - i.e. it can be viewed as consuming one Dataset and prompting the generation of a new one. The set of Input Fields provided are then marked by the Information Routing Layer as 'supplied' on the initial Dataset, which cannot then provide this same set of Fields to any other Consumer Function (although it may provide the same set to an Exchange Function). It has an important use for changing the Value of a given Field (e.g. incrementing a counter) and for enabling an iterative information process to be continued. Alternatively, a Consumer Function may be identified as such by an Attribute. The Information Routing Layer will then recognise this Attribute and place any output Fields from the Consumer Function onto a new Dataset, even when there is no commonality of Input and Output Fields.

The Provider Function iii) is the means by which a Block indicates to the Information Routing Layer its *intention* to provide, without prompting, a specific set of Fields, all of which are to be placed together onto a new Dataset, which is made available only when all the specified Fields have been delivered by the Block.

The Empty Input Exchange Function iv) is the means by which a Block indicates to the Information Routing Layer its capability to provide specified Output Fields when prompted (by provision of an Empty Set of Fields from a [possibly empty] Dataset) and is useful when a Block can provide specified information without requiring any Input Fields- e.g. for time or date-stamping operations.

As noted in the preamble above, the Consumer Function ii) and the Empty Input Exchange Function iv) offer the benefits that the Information Routing Layer is made aware of the expected outputs from a Block (previously it was only aware of anticipated outputs from conventional Exchange Functions [Sets]) and can recover if the relevant.Block fails to deliver.

A Persistent Information Request vi) enables more efficient processing of data which needs to be frequently recorded (e.g in data-logging applications). When a Transient Information Request has been satisfied, the Fields in it are made available to the Block that raised the Information Request via the Information Routing Layer and the Transient Information Request is removed entirely from the system. Thus, the Information Routing Layer would have to wait for the Block to raise another such Transient Information Request before it could process more incoming Datasets with the relevant requested Fields, whereas a Persistent Information Request can be immediately refilled within the information Routing Layer itself as soon as the previous set of Field data has been passed to the requesting Block. This clearly makes better use of processing time.

A Block makes information available for access by other Blocks in the integrated data network via the Information Routing Layer by providing specified information in the form of a set of zero or more Fields being the Output of a Function. If the Function has not been previously provided to the Information Routing Layer, then the Information Routing Layer may create an implicit Provider Function on behalf of the Block whose Output matches the provided Field or Fields. The Information Router attaches the Field or Fields to an existing or new Dataset in accordance with rules applied by the Information Router.

At any one time, therefore, there is a finite set of Fields associated with any extant Dataset. It is not possible to add a Field to a Dataset if the new Field has the same Field Identifier as an existing Field in that Dataset. This is because the set of all Fields in any Dataset can not contain duplicate Field Identifiers (i.e. it must be a "Proper" set). An extant Dataset may have no Fields, in which case the set of Field Identifiers in that Dataset is the Empty Set and the Dataset is an Empty Dataset. The Information Router keeps track of existing Datasets. The Information Router may create new Empty Datasets at its discretion.

A Block which requires particular information can attempt to obtain such information, if available from a source on the integrated data network, by raising a uniquely labelled "Consumer Function" including a Proper Set of Field Identifiers corresponding to the information being sought. The Consumer Function may includes an Attribute, identified as the Consumer Function Input Value, which can be used by the system to prioritise fulfilment of that Consumer Function. The "Consumer Function Input Value" may be allocated by the Block raising the Function or by the Information Router, or may be predetermined. Once a Consumer Function has been raised, it is held at the Information Routing Layer until fulfilment or expiry.

A Consumer Function is referred to as "Unfulfilled" until the specified Fields have been supplied via the Information Router. On submission of a Consumer Function, any existing Dataset that has the required Consumer Function Input Set may release a copy of that set of Fields via the Information Routing Layer.

The Information Router acts to ensure that regardless of how many existing Datasets may release the required Information Request Set, only one of these sets will be used to fulfil the Consumer Function. This operation is done in accordance with rules applied by the Information Router. Once a Consumer Function has been fulfilled, the Fields in it can be made available to the Block that raised the Consumer Function via the Information Routing Layer. When this is done, the Consumer Function is removed entirely from the system (if Transient) or may become available for further fulfilment (if Persistent) following delivery of the specified Output Set of Fields (empty or otherwise) to a New Dataset..

In addition to supplying or requesting information directly, a Block may have the capacity to process information and thereby be able to provide specified Output Fields in exchange for particular Input Fields.

If a Block has a capability to process information, it makes that capability known to the Information Routing Layer by raising a uniquely labelled "Exchange Function" which includes two Proper Sets of Field Identifiers (the "Input Field set" and the "Output Field set"), or by raising a uniquely labelled "Consumer Function" which likewise includes two Sets of Field Identifiers (Input and Output Field sets).

The union of the Exchange Function Input Field set and the Exchange Function Output Field set must itself be a Proper Set. The Exchange Function may include an Attribute known as the Exchange Function Cost. The Exchange Function Cost may be used by the Information Router as a selection parameter to determine the priority to be given to completing a particular Exchange Function and/or to determining which Dataset is selected to participate in a given Exchange Function transaction. The Dataset which supplies a specified Exchange Function Input Set will receive, in *Exchange,* the specified Exchange Function Output Fields.

Once an Exchange Function holds the required Input Fields, these are made available to the Block that raised the Exchange Function. This same Block is then required to provide the specified Output Fields for that Exchange Function. The Exchange Function Output Fields are attached to the original Dataset from which the Exchange Function Input Fields were obtained and the Input Field values in the Exchange Function are emptied.

The net effect of this process is that the original supplying Dataset increases, or aggregates, its set of Fields via the addition of the Exchange Function Output Fields. The Exchange Function will then reverts to its original empty state. This means that the Exchange Function is once more made available for use by the Information Router (i.e it is Persistent in the Information Routing Layer). Optionally, an Exchange Function may be removed (for example if it has an Attribute specifying a single use or suchlike). By following this process, the Information Router can selectively create aggregated Dataset(s) by a process of Aggregate Routing of information to meet Consumer Functions which cannot otherwise be met directly from an original Dataset.

In a Consumer Function, the union of the Consumer Function Input Field set and the Consumer Function Output Field set need *not* itself be a Proper Set. The Consumer Function may include an Attribute known as the Consumer Function Input Value. The Consumer Function Input Value is used by the Information Router as a selection parameter to determine the priority to be given to completing a particular Consumer Function and/or to determining which Datasets are selected to participate in a given Consumer Function transaction. The Consumer Function Output Fields are placed onto a *new* Dataset in the Information Routing Layer.

Once a Consumer Function holds the required Input Fields, these are made available to the Block that raised the Consumer Function. This same Block may then provide the specified Output Fields for that Consumer Function. The Output Fields are attached to a *new* Empty Dataset and the Input Field values in the Consumer Function are emptied.

The net effect of this process is that a *new* Dataset is created with an initial set of Fields corresponding to the Consumer Function Output Field set. The Consumer Function is then removed (if Transient) or then reverts to its original empty state (if Persistent). This means that the Consumer Function is once more made available for use by the Information Router. By following this process, the Information Router can successively fulfil a Persistent Consumer Function.

| Table 1 - Functions (combinations of Input and Output Fields) | | |
|---|---|---|
| INPUT FIELDS EXAMPLE | OUTPUT FIELDS EXAMPLE | DESCRIPTION (¹⁼ Function previously described in EP 01306806.9) |
| [a,b,c] | [x,y,z] | i) Exchange [Set] Function' - The input and output Fields have no intersection. The Router sends the input to the block and, in response, the output Fields are placed on the SAME Dataset as the supplied input Fields. |
| [a,b,c] | [a,x,y] | ii) Consumer Function - a Function which forces the creation of a New Dataset for its output Fields. This may be automatic if there is a Field common to Input and Output, or determined by a Function Attribute.. |
| null | [x,y,z] | iii) Provider Function - The input side is null (as opposed to empty, see below). The Router creates a new Dataset with the specified output fields upon receiving all of these fields from a supplying Block. |
| [] | [x,y,z] | iv) Exchange Function with empty input - The Block only produces the output when the Router prompts for it. The output goes onto a (possibly empty) Dataset as selected by the Router. |
| [a,b,c] | null | v) Transient Information Request' - The output is null, which means the Router is not notified when the Block has finished processing. The Information Request is removed when satisfied. |
| [a,b,c] | [] | vi) Persistent Information Request - The output is empty, but the Block notifies the router when it has finished processing. The Request is then available for re-use. |
| [] | [] | vii) Empty Exchange Function - Technical uses for this function include confirming the presence of a Block and its availability to process an Exchange Function. |
| null | [ ] | viii) Empty Provider Function- A Block or the Router may raise empty Datasets to prompt or initiate other Functions. |
| [] | null | ix) Empty Transient Information Request - A Block may raise this Function to consume an empty Dataset - the empty Set can only be supplied once by any given Dataset. |
| null | null | x) Null function - This may be raised by a Block to test for the presence of the Router. |

The purpose of the Information Router is to manage the transfer of information between Blocks. The objectives of this Information management include enabling Information Requests to be fulfilled and delivering requested Input Fields to Exchange and Consumer Functions. To this end the Information Router acts to "route" information, in the form of Datasets with relevant Fields, between Blocks to enable the available Functions to process the information and produce their various specified Output Fields. The Information Router therefore analyses the available, and potentially available Fields, and aggregates available Functions, including Datasets, to define an appropriate route (which may have several apparent end-points) for the available information to follow to optimise the information processing performance of the system in accordance with specified parameters (e.g. speed; volume; expense etc.). The aggregation of a Dataset with one or more Functions to provide requested information to one or more possible end-points (e.g. Consumer Functions) is referred to as an "Aggregate Route".

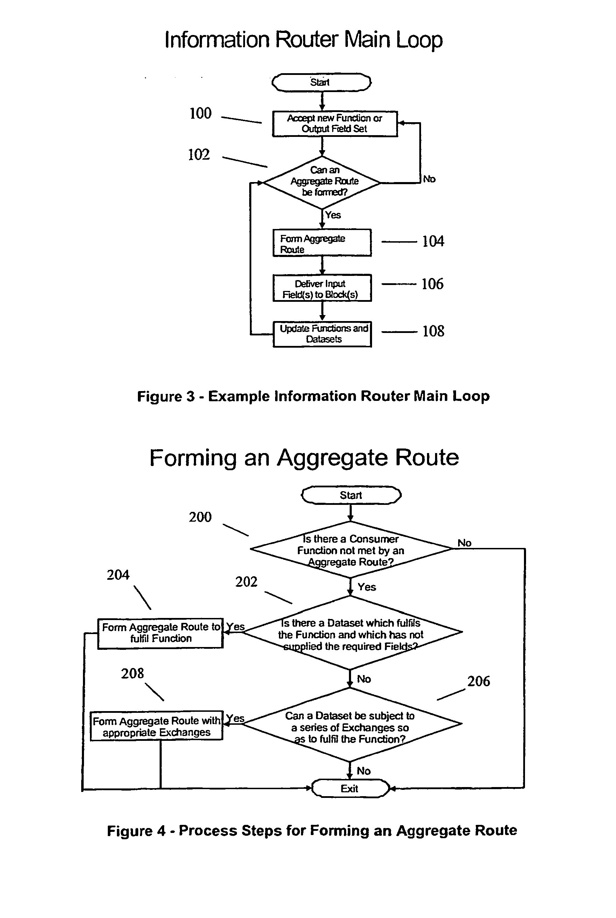

Figure 3 is a flow chart illustrating the basic steps taken by the Information Router in the process of aggregation by matching Functions and Output Field(s) to fulfil Information Requests and provide requested Input Fields to available Functions. When a new Function or set of Output Fields is registered in step 100, then the Information Routing Layer decides whether an Aggregate Route can be determined in step 102. If so, then the initially determined Aggregate Route is followed in step 104. The Aggregate Route may comprise a combination of one Dataset, and a collection of zero or more Exchange Functions whose Output Field sets together with the existing Dataset Field(s) enable at least one Consumer Function Input Field Set to be fulfilled. The Information Router may use any appropriate selection technique to form such a combination. For example, any appropriate known search algorithm may be used to identify the optimal combination of available Functions, and of available Datasets. Optionally the Information Router may have the capacity to look ahead and consider using New Datasets (which may be created as a consequence of the operation of an available Function) to form new potentially effective Aggregate Routes. The appropriate Fields are delivered to Blocks, in one or more Datasets, in step 106. Finally, the status of all Datasets is updated in step 108. The process may be, and frequently will be, iterative, such that new Aggregate Routes will be defined as new Output Fields and new Datasets are created.

Figure 4 is a flow chart of the principal process steps for producing an Aggregate Route from an available Dataset and one or more Exchange Functions to fulfil a specified Consumer Function.. In Step 200 the Information Routing Layer evaluates whether there is an outstanding Consumer Function which is not the end point of an established Aggregate Route. This unfulfilled Function may also be a (Transient) Information Request. In step 202, the Information Routing Layer reviews its stock of available Datasets to determine if one can transfer the appropriate Field(s) to the unfulfilled Function. If so, then the Information Routing Layer causes an appropriate Aggregate Route to be formed in step 204 so that the required Fields can be delivered as above. If not, then the Information Routing Layer further evaluates in step 206 whether a Dataset could be subjected to a series of Exchanges in order fulfil the input requirements of the identified Function. If this is possible, then the Information Routing Layer causes the appropriate Exchanges to be executed in step 208.in order to form a suitable Aggregate Route. It is also possible for the Information Routing Layer to follow these steps iteratively to enable more than one Function to be satisfied using one initiating Function via an Aggregate Route which comprises a combination of information paths determined by following both steps 202, 204 and steps 206, 208.

As described in EP 01306806.9, the Information Router may use specified parameters (i.e. Attributes 304) to make operational decisions whether or not an Aggregate Route can be implemented effectively within any resource constraints which apply to the available Functions.

For example, if one Aggregate Route can satisfy several Consumer Functions, then the Information Router can prioritise on the basis of maximising the margin between "Value" and "Costs" attributable to respective Functions and act to satisfy first the Function whose Value less the corresponding Aggregate Cost is greatest.

The basic rules for matching Datasets with consumer functions might then be:
1. Take each Consumer Function in order of Value, least Value first
2. Take each Dataset in order of age, oldest first
3. If the Dataset can be matched with the Consumer Function (including cost of route <= value of the Consumer Function), set up the Route
4. Try next Dataset
5. Try next Consumer Function

A single Dataset may be matched with several Consumer Functions. Under such rules, even if a newer Dataset can satisfy a Consumer Function more cheaply than an older one, the older one may still be used so long as it comes in under the Consumer Function value.

Alternative ordering rules might be appropriate in different circumstances, for example, if a selection criterion other than the cheapest Route was to be applied.

As before, the Information Router can maintain a history of the elapsed time between the delivery of Input Fields to a specified Function and the provision of the Output Fields by the responsible Block. If one Block historically provides its Output Fields quickly than another, then its associate Function be preferred by the Information Router over another Function from another Block which could alternatively be aggregated to complete a possible Aggregate Route.

Enhanced Information Routing functionality according to the present invention adds additional options and flexibility to the advantages of the basic Information Routing system described in EP 01306806.9.

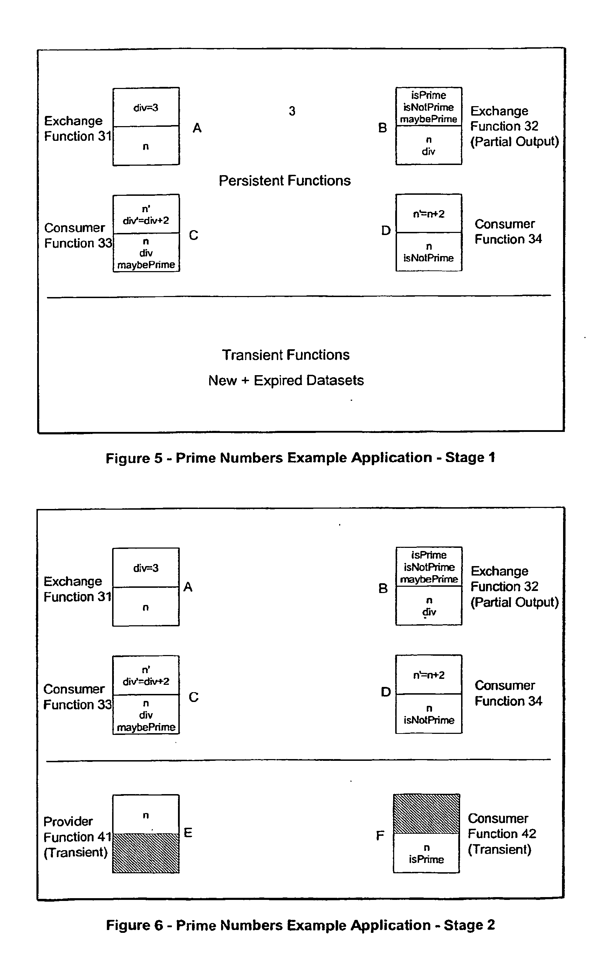

An example application utilising this enhanced functionality for a simple prime number calculator will now be described with reference to Figures 5 to 13.

Figure 5 is a figurative representation of the Information Routing Layer 3 with a number of Functions 31,32,33,34 available for information processing. These Functions are "Persistent" in that they are reusable, and are not removed from the Information Routing Layer whenever they have processed their respective Input Fields. For convenience of representation only, Figure 5 shows separate areas of the Information Routing Layer for Persistent and for Transient Functions. There is no such physical separation in reality in the operational Information Routing Layer.

The four Functions 31,32,33,34 cause no Datasets to be created, because there is no Function available to provide any of the required Input Fields to initiate an Aggregate Route and there is no route from an Empty Dataset to either of the Consumer Functions 33,34.

Exchange Function 31 simply provides an initial divisor, 'div', with a Field Value of 3 in response to an input number Field n. This Function can only form part of a Route if 'div' does not already exist on any contributing Dataset.

Exchange Function 32 is programmed to output three fields, but at runtime two of these will be marked for discarding by the Block owning this Function depending on the values of 'n' and 'div'. The value of the third Field (whichever it is) is immaterial but simply acts as a flag to indicate that its state is "TRUE" (i.e. the Partial Output of Function 32 will be a Field indicative of whether or not the Value of n is, is not or may be prime on the basis of the relative Value of div and whether div divides n. The Fields to be discarded may be marked with a particular Attribute or Field Type recognised by the Information Routing Layer, which will perform the "discard" of these other Fields, as required by the Block.

Function 33 is a Consumer Function, which may be satisfied by any Dataset holding n, div and "maybePrime". It outputs a new n (with the same Value as the input) and a new div (with a value 2 greater than the input Value of div). Its Output Fields must be placed on a New Dataset in view of the commonality between Input and Output Field identities.

Function 34 is also a Consumer Function, in this case satisfied by any Dataset holding n and "isNotPrime". It outputs a new n (with a Value 2 greater than the input). Again, in view of the commonality of Input and Output Fields n, this Function must have its Output Field placed in a New Dataset.

As illustrated in Figure 6, a Block which wishes to make use of these available Functions must itself initially raise two Transient Functions, 41,42. One is a New Dataset Function which acts as a Provider Function 41 to provide a seed value for Field n. Until such time as the Block outputs the Field n in this Provider Function, no Dataset exists in the Information Router. When the Output is provided by the Block, the Transient Provider Function is removed. Because the input of a Provider Function is null (as opposed to Empty), the Information Router does nothing until the Block owning the Provider Function actually provides the output fields.

The second is a Transient Consumer Function (or Information Request) asking for return of a value for Field n with Field "isPrime" the value of which is immaterial as the existence of the Field itself in this case acts as a flag indicating the test is "TRUE". Once these Input Fields are provided to this Function, the Information Router will remove the Function from the Information Routing Layer.

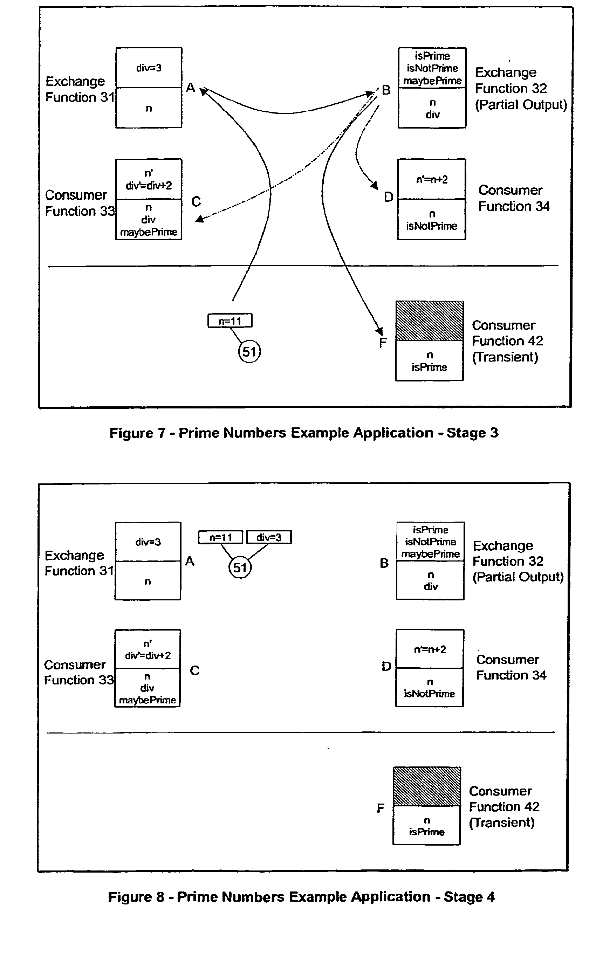

In Figure 7, the Provider Function 41 has produced its Output, the Field n, with the value of n, in this case, set to 11. There now exists a new Dataset 51 in the Information Router, with one Field on it, n, with the value 11 and the Provider Function is removed.

The Information Router now calculates that it can form an Aggregate Route in order to potentially fulfil each of the Consumer Functions 33, 34 and 42 by aggregating Dataset 51 with the (potential) Outputs of Exchange Functions 31 and 32. (In this example, the total cost of the Exchange Functions 31 and 32 (set by their relevant Attributes) is assumed to be less than each of the Consumer Function Values in 33, 34 and 42 (set by their respective Attributes).

As represented in Figure 7, the Aggregate Route comprises paths A-B-F to fulfil Function 42; paths A-B-C to fulfil Function 33; and paths A-B-D to fulfil Function 34. Although the Information Router may not, and does not need to know it, ultimately in fact only one of these paths can be completed for a given n owing to the exclusive and partial nature of the Fields Output from Function 32.

Figure 8 illustrates the state after completion of the first step of the initially determined Aggregate Route. Dataset 51 has provided the Input Field n to Function 31, which has provided Output Field div with a value of 3 onto the same Dataset.

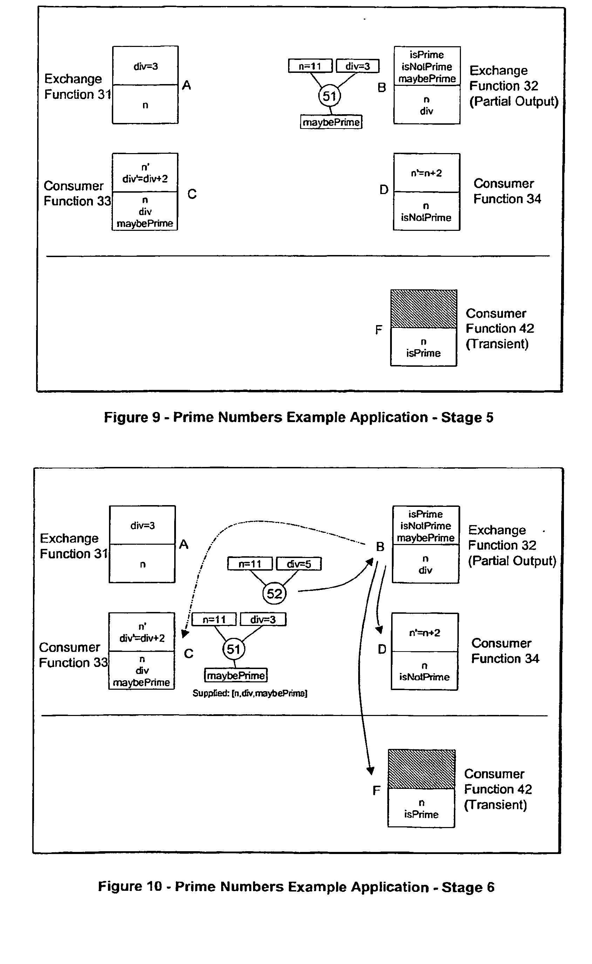

Dataset 51 then provides the Input Fields n and div to the Exchange Function 32, which may have three Output Fields (isPrime, isNotPrime and maybePrime), two of which will inevitably be marked for discard by the responsible Block. In this case, n=11 and div=3 means that 11 may be prime. Therefore the Output Fields isPrime and isNotPrime are marked for discard by the Block, and maybePrime is the only Output Field. The Dataset 51 now has three fields on it - n, div and maybePrime. This is the state illustrated in Figure 9.

The Information Router now recognises that the initial Aggregate Route (of Figure 7) cannot be completed as two of the Fields originally expected have been marked for discard. It is not possible for Dataset 51 to fulfil two Consumer Functions, Function 34 and Function 42, that were previously on the Route. The Information Router is therefore forced to calculate a revised Aggregate Route.

It is still possible for Dataset 51 to fulfil Consumer Function 33 so the Aggregate Route is revised to conclude original path A-B-C only, and paths A-B-F and A-B-D are dropped.

Note also that it is not possible for the Information Router to attempt to feed Exchange Function 32 again with Dataset 51 with a view to fulfilling Functions 34 and 42, because an Exchange Function cannot be supplied by a Dataset which already has one of the Output Fields which may be provided by the Exchange Function.

When the Information Router supplies Consumer Function 33 with the Input Fields n, div and maybePrime, this Function outputs the Fields n (with the same value as before) and div (with a value 2 greater than before). The output of a Consumer Function must be placed on a new Dataset, and so the Information Router now creates New Dataset 52 with the two fields on it, n and div. This is shown in Figure 9.

Dataset 51 still exists, and has now been marked by the Information Router as having supplied the set of fields [n, div, maybePrime]. This particular set of fields cannot be supplied again by this Dataset to any Consumer Function (although it can form the input to another Exchange Function should that be required).

The Information Router now recognises that it can form a new Aggregate Route using Dataset 52 which potentially enables the Consumer Functions 34, 42 and 33 (again) to be fulfilled. The new Aggregate Route includes the paths B-C, B-D and B-F as indicated in Figure 10.

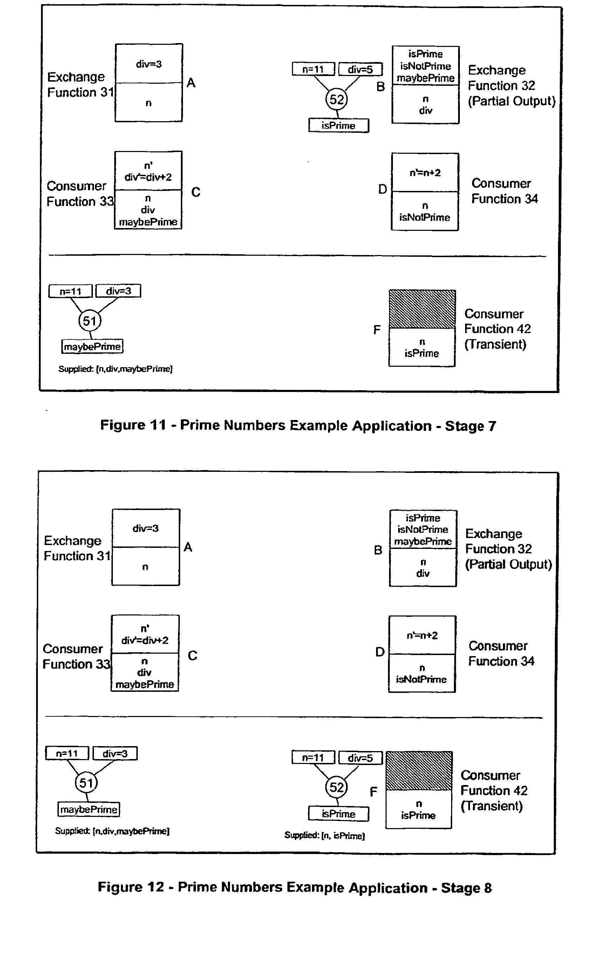

Dataset 52 provides the input fields to Exchange Function 32, which outputs three fields, of which two are again discarded. In this case, the one not marked for discard is isPrime, because div is now greater than the square root of n from which it is possible to infer that n is prime. This Output Field is placed on Dataset 52 as shown in Figure 11.

The Information Router can now satisfy Consumer Function 42 with Dataset 52, but cannot satisfy Functions 33 and 34 because of the absence of the Fields isNotPrime and maybePrime from the partial output of Function 32. The Information Router again forced to recalculate the Aggregate Route for this reason.

The Aggregate Route is therefore reduced to path B-F, and Dataset 52 provides the input Fields n and isPrime to the Consumer Function 42 as shown in Figure 12. Because the Consumer Function 42 has a null output, the Function 42 is then removed by the information Router as soon as it has been satisfied. The Block owning that Function 42 has now received the set of fields [n,isPrime] with n=11.

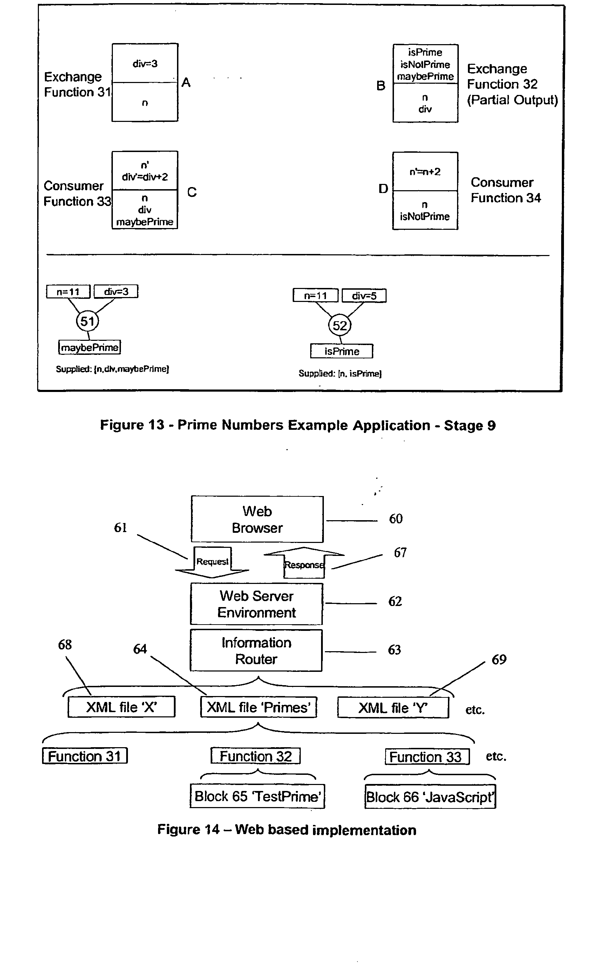

The state of the Information Router is now stable, as illustrated in Figure 13, because no routes can be established using Datasets 51 or 52 to either of the Persistent Consumer Functions 33 or 34. In the case of Function 32, Dataset 51 has already supplied the set [n, div, maybePrime] and is prohibited from doing so again. Although Dataset 52 has the fields n and div, the only way it can provide maybePrime is through Exchange Function 32 - which cannot be used because one of its Output Fields, isPrime, already exists on Dataset 52.

In the case of Function 34, although Dataset 51 has the field n, the only way it can provide 5 isNotPrime is through Exchange Function 32 - -which again cannot be used because one of its output fields, maybePrime, already exists on Dataset 51. The same goes for Dataset 52, except that the common Field in question is isPrime.

One practical way of implementing an Information Router to perform these Functions in the field of web-based application programming is illustrated with reference to Figure 14. In this example, the method is used as a means of programming the response to an HTTP request 61 from a Web Browser 60.

The Information Router 63 is created using Java programming code within a suitable Web Server Environment 62 (a Tomcat Servlet Container in this instance) and executed upon receipt of the HTTP request 61.

5 A text file 64 is first identified by interpreting the Uniform Resource Identifier (URL) contained within the HTTP request 61. That text file 64 (designated as XML file "Primes") is written using the extensible Markup Language, XML.

This particular XML file contains a complete description of all the Functions 31, 32, 33 etc. (as previously defined above), as fragments of XML within the file "Primes", against which a new Information Router 63 is to be created and executed.

The definition of each Function 31, 32, 33 etc., includes a reference to executable code (in this case, a Java class). That code constitutes the Block 65, 66 able to process the input fieldset (if any) of the relevant Function and to produce the specified output fieldset (if any).

The Information Router is then executed, and it in turn executes Functions 31, 32, 33 etc., 5 according the method previously described. It continues to execute until no further Consumer Function specified in the XML file can be satisfied.

During this execution, an HTTP response 67 is generated and sent to the web client (i.e. the web browser 60 in this example). The contents of this response 67 are calculated, generated and output as an effect of the execution by one or more Blocks of one or more Functions in the manner described previously.

By way of example, the definition of Consumer Function 33 appears in the XML file called 'Primes' as follows:

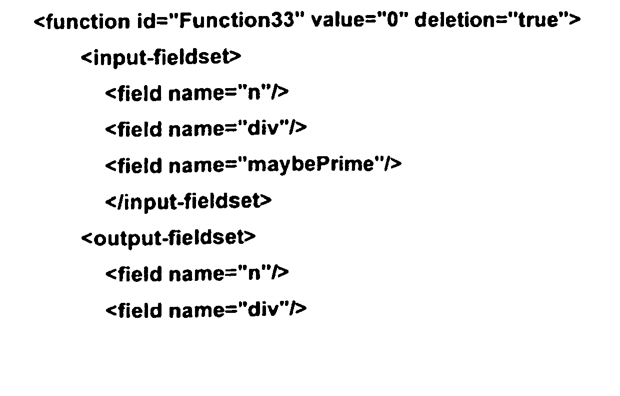

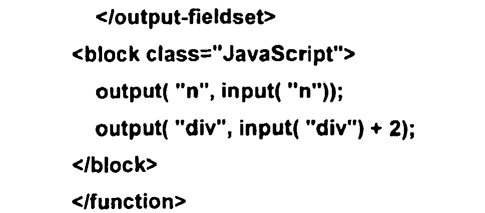

The Block 66 that executes this Function 33 is seen to be programming code written in the Java language and known by the name 'JavaScript'. This programming code works by interpreting the JavaScript program enclosed in the body of the block definition. This JavaScript program provides an Output set comprising the field 'n' with the same value as the input field 'n', and the field 'div' with the value of the input field 'div' plus 2.

In this implementation it is also possible to specify more than one possible Output Field set for a Function. This has the effect of constraining the Block producing output to one of a smaller set of possible Partial Output sets.

For example, the definition of Exchange Function 32 appears in the XML file called 'Primes' as follows:

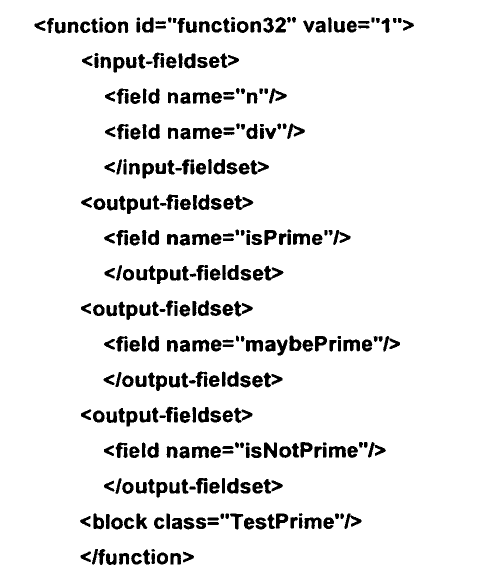

In this case, only one of three Partial Output sets can be produced, the Output set only ever containing a single field.

The Block that executes this Function is programming code written in the Java language and known by the name 'TestPrime'. This programming code is shown below:

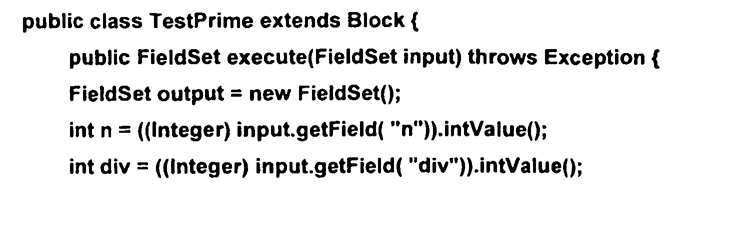

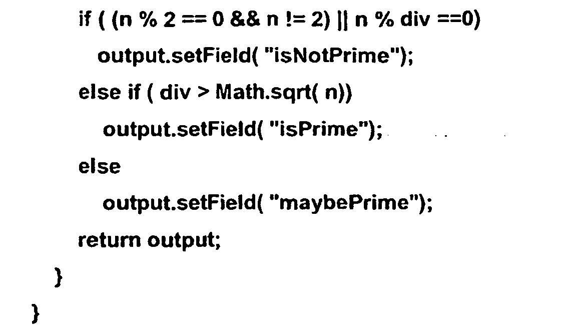

In this example, the implementation of a simple prime number checker has been used for ease of reference. Clearly, the Information Router 63 may be created and used in response to other requests for other processes using other XML files 68, 69 for example.

In general, the implementation of an Information Router according to the methods described offers several benefits including:

Potential for considerable savings in programming time and design and development costs compared to the traditional methods of programming specification, production and distribution.

If the Information Router is so programmed, the designer of a program using this method can test all possible sequences of Functions without any actual programming code being executed by any Blocks. This is because the Information Router does not rely upon the contents of any field as computed by any Block when deciding upon order of execution of Functions.

The fragments of XML that define Functions constitute programming specifications which can be given to those programmers tasked with writing the programming code that constitutes the Blocks able to execute those Functions. By adding information (such as field types, descriptions etc) to the XML file and by providing a special purpose program able to format and distribute the specifications, it is possible to achieve a fully automated distribution of specifications to teams of programmers.

Given these more detailed specifications, the programmer of any Block need make no contact whatever with the programmers of any other Blocks. This is because the complete XML definition of each Function makes no reference to the operation or definition of any other Function. Therefore, a programmer of one Function need make no reference to the activities of the programmer of another Function. This brings considerable savings in the time and cost required to produce a given application program compared to traditional methods which require programmers to communicate continuously.

Similarly the methods of the invention can bring considerable savings in the time and costs involved in debugging, correcting and maintaining programs written using these methods when compared to other methods of programming. The Information Router sequences the execution of all Functions, so that when any error occurs it is able to report not only the location of the error but also the sequence of Functions that led up to it. If the Information Router is so programmed, this can include the inputs supplied to and the output received from each Function.

It is possible to write the programming code for any Function in any language. In the present implementation, the execution code can be written in-line within the XML file using JavaScript as described, or in the form of separately compiled and loaded Java classes. Any one application, then, can be written in an arbitrary combination of languages. This enables considerable savings to be achieved in saving the time and cost required to train programmers in new languages, in retaining programmers with diverse skills to work together on a single project, in employing languages appropriate to particular Functions, and so on.

The methods are inherently fault tolerant. The Information Router's ability to identify alternative sequences of Functions to satisfy a Consumer Function means that the system can be set to mark Blocks that execute incorrectly or fail to execute altogether, and to try other available alternative routes instead. The system may therefore be implemented using simpler and cheaper equipment and allowing for redundancy rather than employing expensive, crash-proof hardware.

The Information Router is able to identify Functions that can execute simultaneously. This means that the system can automatically implement parallel execution without any thought on the part of designer or programmer. Yet more cost savings may thus be possible, because there is no need to buy fast, expensive computers or special purpose products to enable the work of a program to be shared amongst more than one processor.

It will be apparent that an Information Routing Layer and Information Router according to the present invention may be implemented by using distributed components of hardware and software or by using a single device or program depending upon suitability for any particular application. The Fields, Attributes and supplied sets associated with a Dataset may therefore be held within a single device or program or distributed amongst more than one. This applies also to the storage and processing associated with the various forms of Function, including Consumer Functions and Exchange Functions or any form of Function.

## Claims

1. A method of facilitating the exchange and processing of information in and between a plurality of Blocks (1), each Block comprising an information-providing, information-processing or information-consuming element in an integrated data network, at least one Block having a requirement to receive information from one or more Blocks, the method comprising
- providing an Information Routing Layer (3) to manage the exchange of information between Blocks and the fulfilment of at least one Consumer Function (33,34,42) from a Block (1) having a requirement to receive information and a capacity to provide an output in response to the receipt of that information; wherein
- each Block (1) which can provide or process information on the network is registered at the Information Routing Layer (3);
- one or more Blocks (1) has an information processing capability to produce an Output Field set when provided with a specified Input Field set, this capability is recorded in the Information Routing Layer in the form of an Exchange Function (31,32) for each Block with said capability specifying the Input Field set and the Output Field set for each such Block;
- a unit of information is handled in the Information Routing Layer (3) as a Field (301,303) within a Dataset (51) uniquely identified and associated with the Block first responsible for providing information in such Dataset and information is input to and output from a Block in a Field set;
- on recognition of a Consumer Function (33,34,42) specifying an input Field set and an output Field set, the Information Routing Layer (3) operates to match the Input Field set requested for the Consumer Function with a Proper Set comprising a corresponding Field set selected from an available Dataset or Datasets or to form an Aggregate Route (A-B-C,A-B-D,A-B-F) using one or more Fields from an available Dataset or Datasets with one or more Exchange Function(s) so as to enable fulfilment of the Consumer Function Input Field set; and
- following supply of the Input Field set to the Consumer Function, the Information Routing Layer (3) places the Output Field set delivered by the Consumer Function onto a new Dataset.

2. A method according to Claim 1 in which a Function is provided with one or more associated Attribute(s) and the Information Routing Layer utilises the Attribute(s) in determining how to provide or process Input or Output Field sets to or from the said Function.

3. A method according to Claim 2 in which a Consumer Function specifies a Consumer Function Value as an associated Attribute, and/or an Exchange Function specifies an Exchange Function Cost as an associated Attribute, each said Value and/or Cost being a representative measure of a critical resource which is relevant as a determining factor in the operation of the Information Routing Layer, and the Information Routing Layer uses the specified Consumer Function Value and/or Exchange Function Cost(s) to determine whether a particular Consumer Function Input Field set can or should be provided appropriately by possible Exchanges, within the applicable resource constraints.

4. A method according to Claim 2 in which an Attribute (304) associated with a Function determines whether the Information Routing Layer treats that Function as a Consumer Function or as an Exchange Function.

5. A method according to any preceding Claim in which a Field in an Output Field set from a Function may be marked to be discarded by the Information Routing Layer.

6. A method according to any preceding Claim in which an Input Field set or an Output Field set is an empty set or a null set.

7. A method according to any preceding Claim in which a Block intending to provide to the Information Routing Layer, unsolicited, a Field set, all the Fields of which are intended to be made available together on a new Dataset, indicates this intention to the Information Routing Layer by raising a Provider Function having the intended Fields specified in the Provider Function Output Field set and a null Input Field set.

8. An Information Router for facilitating the exchange and processing of information in and between a plurality of Blocks, each Block comprising an information-providing, information-processing or information consuming element in an integrated data network, at least one Block having a requirement to receive information from one or more other Blocks, the Information Router utilising one or more computer processor(s) programmed to manage the exchange of information between Blocks and the fulfilment of a specific Consumer Function from a Block having a requirement to receive information and a capacity to provide an output in response to the receipt of that information; whereby each Block which can provide or process information on the network is registered by the Information Router; one or more Blocks has an information processing capability to produce a specified output Field set when provided with a specified input Field set, and wherein the Information Router is programmed to record such capability in the form of an Exchange Function for each Block with such capability specifying the Input Field Set and the Output Field set for each such Block; a unit of information is processed by the information Router as a Field within a Dataset uniquely identified and associated with the Block first responsible for providing information in such Dataset and information is input to and output from a Block in a Field set; and whereby on recognition of a Consumer Function specifying an input Field set and an output Field set, the Information Router will operate to match the Input Field set requested for the Consumer Function with a Proper Set comprising a corresponding Field set selected from an available Dataset or Datasets or to form an Aggregate Route using one or more Fields from an available Dataset or Datasets with one or more Exchange Function(s) so as to enable fulfilment of the Consumer Function Input Field set; and, following supply of the Input Field set to the Consumer Function, to place the Output Field set delivered by the Consumer Function onto a new Dataset.

9. An Information Router according to Claim 8 programmed to use an Attribute associated with a given Function in determining how to provide or process Input or Output Field sets to or from the said Function.

10. An Information Router according to Claim 9 programmed to use an Attribute identified as a Consumer Function Value when specified in an Consumer Function, and/or an Attribute identified as an Exchange Function Cost when specified in an Exchange Function, each said Value and/or Cost being a representative measure of a critical resource which is relevant as a determining factor in the operation of the Information Router, and wherein, in operation, the Information Router uses the specified Consumer Function Value and/or Exchange Function Cost(s) to determine whether a particular Consumer Function Input Field set can or should be provided appropriately by possible Exchanges, within the applicable resource constraints.

11. An Information Router according to Claim 9 programmed to use an Attribute associated with a Function to determine whether that Function is to be treated as a Consumer Function or as an Exchange Function.

12. An Information Router according to any of Claims 8 to 11 programmed to recognise that a Field in an Output Field set from a Function is to be discarded by the Information Router.

13. An Information Router according to any of Claims 8 to 12 programmed to accept an Input Field set or an Output Field set which is an empty set or a null set.

14. An Information Router according to any of Claims 8 to 13 programmed to enable a Block intending to provide, unsolicited, a Field set, all the Fields of which are to be made available together by the Information Router on a new Dataset, to indicate this intention by raising a Provider Function having the intended Fields specified in the Provider Function Output Field set and a null Input Field set.

15. A method according to any of Claims 1 to 7 in which the Information Routing Layer is instantiated on request.

## Patentansprüche

1. Verfahren zum Ermöglichen des Austauschs und der Verarbeitung von Informationen in und zwischen mehreren Blöcken (1), wobei jeder Block ein Informationen bereitstellendes, Informationen verarbeitendes oder Informationen benutzendes Element in einem integrierten Datennetz umfasst, wobei wenigstens ein Block eine Anforderung zum Empfangen von Informationen von einem oder von mehreren Blöcken besitzt, wobei das Verfahren umfasst:
- Bereitstellen einer Informations-Routing-Schicht (3) für das Management des Austauschs von Informationen zwischen Blöcken und für die Erfüllung wenigstens einer Benutzerfunktion (33, 34, 42) von einem Block (1), der eine Anforderung zum Empfangen von Informationen und eine Fähigkeit zum Bereitstellen einer Ausgabe in Reaktion auf den Empfang dieser Informationen besitzt; wobei
- jeder Block (1), der in dem Netz Informationen bereitstellen oder verarbeiten kann, bei der Informations-Routing-Schicht (3) registriert wird;
- einer oder mehrere Blöcke (1) eine Informationsverarbeitungsfähigkeit haben, um eine Ausgabefeldmenge zu erzeugen, wenn für sie eine spezifizierte Eingabefeldmenge bereitgestellt wird, wobei diese Fähigkeit in der Informations-Routing-Schicht für jeden Block mit der Fähigkeit in Form einer Austauschfunktion (31, 32) aufgezeichnet wird, die für jeden solchen Block die Eingabefeldmenge und die Ausgabefeldmenge spezifiziert;
- eine Informationseinheit in der Informations-Routing-Schicht (3) als ein Feld (301, 303) innerhalb eines Datensatzes (51) behandelt wird, das eindeutig identifiziert und dem Block zugeordnet ist, der zuerst für das Bereitstellen von Informationen in einem solchen Datensatz verantwortlich ist, wobei Informationen in einen Block in einer Feldmenge eingegeben und von einem Block in einer Feldmenge ausgegeben werden;
- die Informations-Routing-Schicht (3) beim Erkennen einer Benutzerfunktion (33, 34, 42), die eine Eingabefeldmenge und eine Ausgabefeldmenge spezifiziert, so arbeitet, dass sie die für die Benutzerfunktion angeforderte Eingabefeldmenge an eine echte Menge, die eine entsprechende Feldmenge umfasst, die aus einem verfügbaren Datensatz oder aus verfügbaren Datensätzen ausgewählt wird, anpasst oder dass sie unter Verwendung eines Felds oder mehrerer Felder aus einem verfügbaren Datensatz oder aus verfügbaren Datensätzen mit einer Austauschfunktion oder mit mehreren Austauschfunktionen einen Gesamtleitweg (A-B-C, A-B-D, A-B-F) bildet, um die Erfüllung der Benutzerfunktions-Eingabefeldmenge zu ermöglichen; und
- die Informations-Routing-Schicht (3) nach dem Zuführen der Eingabefeldmenge zu der Benutzerfunktion die von der Benutzerfunktion gelieferte Ausgabefeldmenge in einem neuen Datensatz anordnet.

2. Verfahren nach Anspruch 1, in dem für eine Funktion ein Attribut oder mehrere zugeordnete Attribute bereitgestellt werden, wobei die Informations-Routing-Schicht das Attribut bzw. die Attribute bei der Bestimmung nutzt, wie die Eingabefeldmenge oder die Ausgabefeldmenge zu oder von der Funktion bereitgestellt oder verarbeitet werden soll.

3. Verfahren nach Anspruch 2, in dem eine Benutzerfunktion einen Benutzerfunktionswert als ein zugeordnetes Attribut spezifiziert und/oder eine Austauschfunktion Austauschfunktionskosten als ein zugeordnetes Attribut spezifiziert, wobei jeder dieser Werte und/oder Kosten ein repräsentatives Maß einer kritischen Ressource sind, die als ein bestimmender Faktor im Betrieb der Informations-Routing-Schicht relevant ist, und in dem die Informations-Routing-Schicht den spezifizierten Benutzerfunktionswert und/oder die spezifizierten Austauschfunktionskosten verwendet, um zu bestimmen, ob eine besondere Benutzerfunktions-Eingabefeldmenge durch mögliche Austausche innerhalb der anwendbaren Ressourcenbeschränkungen geeignet bereitgestellt werden kann oder sollte.

4. Verfahren nach Anspruch 2, in dem ein einer Funktion zugeordnetes Attribut (304) bestimmt, ob die Informations-Routing-Schicht diese Funktion als eine Benutzerfunktion oder als eine Austauschfunktion behandelt.

5. Verfahren nach einem vorangehenden Anspruch, in dem ein Feld in einer Ausgabefeldmenge von einer Funktion **gekennzeichnet** werden kann, damit es durch die Informations-Routing-Schicht verworfen wird.

6. Verfahren nach einem vorangehenden Anspruch, in dem eine Eingabefeldmenge oder eine Ausgabefeldmenge eine leere Menge oder eine Nullmenge ist.

7. Verfahren nach einem vorangehenden Anspruch, in dem ein Block, der beabsichtigt, für die Informations-Routing-Schicht unaufgefordert eine Feldmenge bereitzustellen, deren Felder alle dafür vorgesehen sind, zusammen in einem neuen Datensatz verfügbar gemacht zu werden, diese Absicht der Informations-Routing-Schicht durch Aufstellen einer Anbieterfunktion, die die vorgesehenen Felder in der Anbieterfunktions-Ausgabefeldmenge und in einer Null-Eingabefeldmenge spezifiziert hat, angibt.

8. Informations-Router zum Ermöglichen des Austauschs und der Verarbeitung von Informationen in und zwischen mehreren Blöcken, wobei jeder Block ein Informationen bereitstellendes, Informationen verarbeitendes oder Informationen benutzendes Element in einem integrierten Datennetz umfasst, wobei wenigstens ein Block eine Anforderung zum Empfangen von Informationen von einem oder von mehreren anderen Blöcken besitzt, wobei der Informations-Router einen Computerprozessor oder mehrere Computerprozessoren nutzt, der/die so programmiert ist/sind, dass er/sie den Austausch von Informationen zwischen Blöcken und die Erfüllung einer spezifischen Benutzerfunktion von einem Block, der eine Anforderung zum Empfangen von Informationen und eine Fähigkeit zum Bereitstellen einer Ausgabe in Reaktion auf den Empfang dieser Informationen besitzt, regelt/regeln; wobei jeder Block, der in dem Netz Informationen bereitstellen oder verarbeiten kann, durch den Informations-Router registriert ist; wobei einer oder mehrere Blöcke eine Informationsverarbeitungsfähigkeit haben, um eine spezifizierte Ausgabefeldmenge zu erzeugen, wenn für sie eine spezifizierte Eingabefeldmenge bereitgestellt wird, und wobei der Informations-Router so programmiert ist, dass er für jeden Block mit dieser Fähigkeit diese Fähigkeit in Form einer Austauschfunktion aufzeichnet, die die Eingabefeldmenge und die Ausgabefeldmenge für jeden solchen Block spezifiziert, wobei eine Informationseinheit durch den Informations-Router als ein Feld innerhalb eines Datensatzes verarbeitet wird, das eindeutig identifiziert und dem Block zugeordnet ist, der zuerst für das Bereitstellen von Informationen in einem solchen Datensatz verantwortlich ist, wobei Informationen in einen Block in einer Feldmenge eingegeben und von einem Block in einer Feldmenge ausgegeben werden; und wobei der Informations-Router beim Erkennen einer Benutzerfunktion, die eine Eingabefeldmenge und eine Ausgabefeldmenge spezifiziert, so arbeitet, dass er die für die Benutzerfunktion angeforderte Eingabefeldmenge an eine echte Menge anpasst, die eine entsprechende Feldmenge umfasst, die aus einem verfügbaren Datensatz oder aus verfügbaren Datensätzen ausgewählt wird, oder dass er unter Verwendung eines Felds oder mehrerer Felder aus einem verfügbaren Datensatz oder aus verfügbaren Datensätzen mit einer Austauschfunktion oder mit mehreren Austauschfunktionen einen Gesamtleitweg bildet, um die Erfüllung des Benutzerfunktions-Eingabefeldmenge zu ermöglichen; und nach dem Zuführen der Eingabefeldmenge zu der Benutzerfunktion die von der Benutzerfunktion gelieferte Ausgabefeldmenge in einem neuen Datensatz anordnet.

9. Informations-Router nach Anspruch 8, der so programmiert ist, dass er ein Attribut verwendet, das einer gegebenen Funktion bei der Bestimmung zugeordnet wird, wie die Eingabefeldmenge oder die Ausgabefeldmenge zu der oder von der Funktion bereitgestellt oder verarbeitet werden soll.

10. Informations-Router nach Anspruch 9, der so programmiert ist, dass er ein als ein Benutzerfunktionswert identifiziertes Attribut, wenn es in einer Benutzerfunktion spezifiziert ist, und/oder ein als Austauschfunktionskosten identifiziertes Attribut, wenn es in einer Austauschfunktion spezifiziert ist, verwendet, wobei jeder dieser Werte und/oder Kosten ein repräsentatives Maß einer kritischen Ressource ist, die als ein bestimmender Faktor im Betrieb des Informations-Routers relevant ist, und wobei der Informations-Router im Betrieb den spezifizierten Benutzerfunktionswert und/oder die spezifizierten Austauschfunktionskosten verwendet, um zu bestimmen, ob eine besondere Benutzerfunktions-Eingabefeldmenge durch mögliche Austausche innerhalb der anwendbaren Ressourcenbeschränkungen geeignet bereitgestellt werden kann oder sollte.

11. Informations-Router nach Anspruch 9, der so programmiert ist, dass er ein Attribut verwendet, das einer Funktion zugeordnet ist, um zu bestimmen, ob diese Funktion als eine Benutzerfunktion oder als eine Austauschfunktion behandelt werden soll.

12. Informations-Router nach einem der Ansprüche 8 bis 11, der so programmiert ist, dass er erkennt, dass ein Feld in einer Ausgabefeldmenge von einer Funktion durch den Informations-Router verworfen werden soll.

13. Informations-Router nach einem der Ansprüche 8 bis 12, der so programmiert ist, dass er eine Eingabefeldmenge oder eine Ausgabefeldmenge annimmt, die eine leere Menge oder eine Nullmenge ist.

14. Informations-Router nach einem der Ansprüche 8 bis 13, der so programmiert ist, dass er ermöglicht, dass ein Block, der dafür vorgesehen ist, unaufgefordert eine Feldmenge bereitzustellen, deren Felder alle durch den Informations-Router zusammen in einem neuen Datensatz verfügbar gemacht werden sollen, diese Absicht durch Aufstellen einer Anbieterfunktion, die die vorgesehenen Felder in der Anbieterfunktions-Ausgabefeldmenge und in einer Null-Eingabefeldmenge spezifiziert hat, angibt.

15. Verfahren nach einem der Ansprüche 1 bis 7, in dem die Informations-Routing-Schicht auf Anforderung instanziiert wird.

## Revendications

1. Méthode destinée à faciliter l'échange et le traitement d'informations dans et entre une pluralité de Blocs (1), chaque Bloc comprenant un élément de fourniture d'informations, de traitement d'informations ou un élément d'information sur la consommation dans un réseau intégré de données, au moins un Bloc présentant une exigence de réception d'informations en provenance d'un ou de plusieurs Blocs, la méthode comprenant
- la fourniture d'une couche de routage d'informations (3) destinée à gérer l'échange d'informations entre les Blocs et l'exécution d'au moins une fonction de consommation (33, 34, 42) à partir d'un Bloc (1) ayant un besoin de recevoir des informations et doté d'une aptitude à fournir un signal de sortie en réponse à la réception de ces informations; dans laquelle
- chaque Bloc (1) qui peut fournir ou traiter des informations sur le réseau est enregistré au niveau de la couche de routage d'informations (3);
- un ou plusieurs Blocs (1) possède une aptitude de traitement d'informations pour produire un ensemble de champs de sortie lorsqu'il est doté d'un ensemble spécifié de champs d'entrée, cette aptitude est enregistrée, pour chaque Bloc, dans la couche de routage d'informations sous la forme d'une fonction d'échange (31, 32) avec ladite aptitude spécifiant l'ensemble des champs d'entrée et l'ensemble des champs de sortie pour chaque Bloc de ce type;
- une unité d'informations est traitée dans la couche de routage d'informations (3) sous la forme d'un champs (301, 303) à l'intérieur d'un ensemble de données (51) identifiées de manière unique et associées, dans cet ensemble de données, au Bloc premier responsable de la fourniture d'informations, et l'information est introduite et extraite d'un Bloc dans un ensemble de champs;
- à la reconnaissance d'une fonction de consommation (33, 34, 42) spécifiant un ensemble de champs d'entrée ainsi qu'un ensemble de champs de sortie, la couche de routage d'informations (3) opère de façon à faire correspondre l'ensemble de champs d'entrée demandé pour la fonction de consommation avec un propre ensemble comprenant un ensemble de champs correspondant sélectionné à partir d'un ensemble de données ou des ensembles de données disponibles ou pour constituer un chemin structuré (A-B-C, A-B-D, A-B-F) utilisant un ou plusieurs champs d'un ensemble de données ou d'ensembles de données avec une ou plusieurs fonctions d'échange de manière à permettre l'exécution de l'ensemble des champs d'entrée des fonctions de consommation; et
- à la suite de l'introduction de l'ensemble de champs d'entrée dans la fonction de consommation, la couche de routage d'informations (3) place l'ensemble des champs de sortie délivré par la fonction de consommation dans un nouvel ensemble de données.

2. Méthode selon la revendication 1, dans laquelle une fonction est fournie avec un ou plusieurs attributs associés, et la couche de routage d'informations utilise le(s) attribut(s) dans le but de déterminer comment fournir ou traiter des ensembles de champs d'entrée ou de sortie pour ou en provenance de ladite fonction.

3. Méthode selon la revendication 2, dans laquelle une fonction de consommation spécifie une valeur de fonction de consommation comme attribut associé, et/ou une fonction d'échange spécifie un coût de fonction d'échange comme attribut associé, chaque dite valeur ou coût étant une mesure représentative d'une ressource critique qui est pertinente en tant que facteur de détermination dans l'opération de la couche de routage d'informations, et la couche de routage d'informations emploie la valeur de fonction de consommation spécifiée et/ou le(s) coût(s) de fonction d'échange pour déterminer si un ensemble de champs d'entrée de fonction de consommation particulier peut ou devrait être fourni de manière appropriée par de possibles échanges, au sein des contraintes de ressources applicables.

4. Méthode selon la revendication 2, dans laquelle un attribut (304) associé avec une fonction détermine si la couche de routage d'informations traite cette fonction en tant que fonction de consommation ou en tant que fonction d'échange.

5. Méthode selon une quelconque revendication précédente, dans laquelle un champs dans un ensemble de champs de sortie à partir d'une fonction peut être marqué afin d'être mis à l'écart par la couche de routage d'informations.

6. Méthode selon une quelconque revendication précédente, dans laquelle un ensemble de champs d'entrée ou un ensemble de champs de sortie est un ensemble vide ou un ensemble nul.

7. Méthode selon une quelconque revendication précédente, dans laquelle un Bloc entendant fournir à la couche de routage d'informations, non-sollicitée, un ensemble de champs ou tous les champs dont il est prévu qu'ils soient disponibles ensemble sur un nouvel ensemble de données, indique cette intention à la couche de routage d'informations en soulevant une fonction de fourniture d'accès possédant les champs visés spécifiés dans l'ensemble de champs de sortie de la fonction de fourniture d'accès ainsi qu'un ensemble de champs d'entrée nul.

8. Routeur d'informations pour faciliter les échanges et le traitement d'informations dans et entre une pluralité de Blocs, chaque Bloc comprenant une fourniture d'informations, un traitement d'informations ou un élément de consommation d'informations dans un réseau de données intégré, au moins un Bloc possédant l'exigence pour recevoir des informations d'un ou de plusieurs autres Blocs, le routeur d'informations utilisant un ou plusieurs processeurs d'ordinateur programmé pour gérer les échanges d'informations entre les Blocs et la gestion optimale des commandes d'une fonction de consommation spécifique à partir d'un Bloc ayant une exigence pour recevoir des informations et une aptitude à fournir une sortie en réponse à la réception de cette information; par lequel chaque Bloc qui peut fournir ou traiter des informations sur le réseau est enregistré par le routeur d'informations; un ou plusieurs Blocs possède une aptitude à traiter des informations pour produire un ensemble de champs de sortie spécifié lorsqu'il est approvisionné d'un ensemble de champs d'entrée spécifié, et dans lequel le routeur d'informations est programmé pour enregistrer une telle aptitude sous la forme d'une fonction d'échange pour chaque Bloc avec une telle aptitude en spécifiant l'ensemble de champs d'entrée et l'ensemble de champs de sortie pour chaque Bloc de ce type; une unité d'informations est traitée par le routeur d'informations en tant que champs au sein d'un ensemble de données identifiées de manière unique et est associée au Bloc premier responsable de la fourniture d'informations dans cet ensemble de données et l'information est introduite et extraite d'un Bloc dans un ensemble de champs; et dans lequel à la reconnaissance d'une fonction de consommation spécifiant un ensemble de champs d'entrée ainsi qu'un ensemble de champs de sortie, la couche de routage d'informations opèrera de façon à faire correspondre l'ensemble de champs d'entrée demandé pour la fonction de consommation avec un propre ensemble comprenant un ensemble de champs correspondant sélectionné à partir d'un ensemble de données ou des ensembles de données disponibles ou pour constituer un chemin structuré utilisant un ou plusieurs champs d'un ensemble de données ou d'ensembles de données avec une ou plusieurs fonctions d'échange de manière à permettre l'exécution de l'ensemble des champs d'entrée des fonctions de consommation; et à la suite de l'approvisionnement de l'ensemble des champs d'entrée dans la fonction de consommation, pour placer l'ensemble de champs de sortie délivré par la fonction de consommation dans un nouvel ensemble de données.

9. Routeur d'informations selon la revendication 8, programmé pour utilisé un attribut associé à une fonction donnée afin de déterminer comment fournir ou traiter les ensembles de champs d'entrée ou de sortie vers ou depuis ladite fonction.

10. Routeur d'informations selon la revendication 9, programmé pour utiliser un attribut identifié en tant que valeur de fonction de consommation lorsque cela est spécifié dans une fonction de consommation, et/ou un attribut identifié comme coût de fonction d'échange lorsque cela est spécifié dans une fonction d'échange, chaque dite valeur et/ou coût étant une mesure représentative d'une ressource critique qui est pertinente en tant que facteur de détermination dans l'opération de la couche de routage d'informations, et dans lequel, en cours de fonctionnement, le routeur d'informations emploie la valeur de fonction de consommation spécifiée et/ou le(s) coût(s) de fonction d'échange pour déterminer si un ensemble de champs d'entrée de fonction de consommation particulier peut ou devrait être fourni de manière appropriée par de possibles échanges, au sein des contraintes de ressources applicables.

11. Routeur d'informations selon la revendication 9, programmé afin d'utiliser un attribut associé à une fonction pour déterminer si cette fonction est à traiter en tant que fonction de consommation ou en tant que fonction d'échange.

12. Routeur d'informations selon n'importe quelles revendications 8 à 11, programmé pour reconnaître qu'un champs dans un ensemble de champs d'entrée doit être écarté par le routeur d'informations à partir d'une fonction.

13. Routeur d'informations selon n'importe quelles revendications 8 à 12, programmé pour accepter un ensemble de champs d'entrée ou un ensemble de champs de sortie qui est un ensemble vide ou une ensemble nul.

14. Routeur d'informations selon n'importe quelles revendications 8 à 13, programmé pour permettre à un Bloc ayant l'intention de fournir, non sollicité, un ensemble de champs ou tous les champs dont il est prévu qu'ils soient disponibles ensemble par le routeur d'informations sur un nouvel ensemble de données, d'indiquer cette intention en soulevant une fonction de fourniture d'accès possédant les champs visés spécifiés dans l'ensemble de champs de sortie de la fonction de fourniture d'accès ainsi qu'un ensemble de champs d'entrée nul.

15. Méthode selon n'importe quelles revendications 1 à 7, dans laquelle la couche de routage d'informations est instanciée sur demande.
